# EUROPÄISCHE PATENTSCHRIFT

(11) **EP 1 198 437 B1**
(45) Veröffentlichungstag und Bekanntmachung des Hinweises auf die Patenterteilung: **27.04.2005**
(21) Anmeldenummer: 00979623.6
(22) Anmeldetag: 24.11.2000
(51) Int. Cl.: C04B 35/532, C04B 35/83, B28B 3/20, B28B 3/24, B28B 21/52, B28B 3/26

(54) **HERSTELLUNG KERAMISCHER ROHRE MIT RADIALER VORZUGSRICHTUNG**
PRODUCTION OF CERAMIC TUBES WITH A RADIAL ORIENTATION PREFERENCE
FABRICATION DE TUBES CERAMIQUES A PREFERENCE RADIALE

(30) Priorität: 05.01.2000 DE 10000165
(43) Veröffentlichungstag der Anmeldung: 24.04.2002
(73) Patentinhaber: SGL CARBON AG, 65203 Wiesbaden (DE)
(72) Erfinder: MUELLER, Holger, 06369 Radegast (DE); KUENZEL, Juergen, 86672 Thierhaupten (DE); SCHMID, Manfred, 86156 Augsburg (DE)
(74) Vertreter: Wiedemann, Markus, Dr.
(86) Internationale Anmeldenummer: PCT/EP2000/011751
(87) Internationale Veröffentlichungsnummer: WO 2001/049633

(56) Entgegenhaltungen:
- EP-A- 0 216 978
- DE-A- 1 945 981
- US-A- 3 267 518
- US-A- 3 666 847
- US-A- 3 676 535
- US-A- 3 874 837

## Beschreibung

### Stand der Technik

Die Erfindung geht aus von einem Verfahren und einer Vorrichtung zur Herstellung von Bauteilen und Halbzeugen aus synthetischem Graphit oder keramischem Granulat, insbesondere zur Herstellung von Graphitrohren sowie von einem Bauteil oder Halbzeug aus synthetischem Graphit oder keramischem Granulat gemäß den Oberbegriffen von Anspruch 1, Anspruch 10 und Anspruch 15.

Graphit weist eine gute elektrische und thermische Leitfähigkeit auf und verfügt über eine hohe chemische und thermische Beständigkeit. Aus diesem Grund wird der Werkstoff Graphit beispielsweise in Form von Rohren als Halbzeug für Chemieapparate verwendet. So sind z.B. Rohrwärmetauscher aus gebündelten Graphitrohren bekannt.

Da Graphit zu den keramischen Werkstoffen zählt, gehört zu den weniger vorteilhaften Eigenschaften dieses Werkstoffs eine verhältnismäßig geringe Festigkeit besonders bei stoßartigen und schwellenden Belastungen. Um die dynamische Festigkeit von Graphitrohren zu verbessern wurde gemäß der DE 31 16 309 C2 vorgeschlagen, die Rohre mit Carbonfasem zu umwickeln, wobei die kraftschlüssige Verbindung zwischen dem Rohr und dem Faserbündel ähnlich einem Laminat durch ein aushärtbares Harz erzeugt wird. Dieses Verfahren ist jedoch relativ aufwendig und deshalb kostenintensiv.

Gemäß einem bekannten Verfahren zur Herstellung von Bauteilen und Halbzeugen aus Graphit werden als Rohstoffe z.B. Petrolkoks oder Graphitgranulat verwendet, die in einem ersten Schritt zerkleinert und gesiebt werden. Anschließend wird die zerkleinerte Ausgangsmasse mit einem Bindemittel zu einem viskosen Mischgut vermischt. Für die Formgebung des so erhaltenen preßfertigen Mischguts beispielsweise zu einem Rohr wird dieses in den Vorratsraum einer Strangpresse eingefüllt und dann über einen in einem Pressengehäuse längsverschieblichen Preßkolben in Richtung einer Austrittsöffnung verdichtet und als praktisch endloser Strang z.B. in Form eines Rohres ausgepreßt Anstelle eines Preßkolbens kann auch eine mit dem Pressengehäuse koaxiale Schneckenwelle das Auspressen des Materials übernehmen.

Aufgrund der Vorschubbewegung des Preßkolbens und der relativ guten Fließfähigkeit des Mischguts richten sich beim Strangpressen oder Extrudieren die vorwiegend länglich geformten Koks- bzw. Graphitpartikel im auf die Austrittsöffnung zu gerichteten Strömungsfeld von Anfang an parallel zur Preßrichtung aus und bleiben bei den anschließenden Fertigungsschritten in dieser Position "eingefroren". Da die Hauptrichtung der Wärmeleitung vornehmlich entlang der Ausrichtung der Werkstoffpartikel verläuft, weisen die Materialeigenschaften der solcherart gepressten Bauteile infolgedessen starke Anisotropien auf, d.h. die Wärmeleitfähigkeit eines stranggepreßten Wärmetauscher-Graphitrohres hat wegen der vomehmlichen Partikelausrichtung parallel zur Preßrichtung in axialer Längsrichtung zwar hohe Werte, ist aber in der für den Wärmeübergang in Wärmetauscherrohren wichtigen radialen Richtung unvorteilhaft niedrig. Andererseits wirkt sich die Ausrichtung der Partikel in axialer Längsrichtung günstig auf die Biege- und Zugfestigkeit der Graphitbauteile aus, was insbesondere bei Wärmetauscherrohren vorteilhaft ist.

Übliche Strangpressen weisen einen innerhalb eines Pressengehäuses längsbeweglichen Preßkolben auf, der einen in eine Austrittsöffnung eines sich in Preßrichtung trichterförmig verengenden Formgebungsmundstücks des Pressengehäuses mündenden, mit Preßgut befüllbaren und durch seine Preßbewegung verkleinerbaren Vorratsraum begrenzt. Nach erfolgtem Auspressen des Preßguts aus der Austrittsöffnung muß der Preßkolben vollständig aus dem Pressengehäuse herausgezogen werden, um den Vorratsraum erneut mit Preßgut befüllen zu können. Es liegt auf der Hand, daß der Nachfüllvorgang aufwendig ist und deshalb der Kolbenhub und der Vorratsraum solcher Strangpressen so groß wie möglich ausgeführt wird, um häufiges Nachfüllen aus wirtschaftlichen Gründen zu umgehen. Entsprechend ist der im Vorratsraum befindliche Preßling relativ lang, wodurch die zum Verdichten und Auspressen des Preßlings aus der verengten Austrittsöffnung notwendigen Vorschubkräfte hoch sind. Um die Preßkräfte zu begrenzen, wird die Masse entsprechend fließfähig eingestellt. Beim Auspressen stellt sich bereits innerhalb des Vorratsraumes ein Strömungsfeld ein, in welchem die Graphitpartiket dazu tendieren, sich parallel zur Preßrichtung auszurichten, was wiederum in der bereits beschriebenen, bei Rohren unerwünschten Anisotropie des Graphitwerkstoffs resultiert.

Der vorliegenden Erfindung liegt demgegenüber die Aufgabe zugrunde, ein Verfahren und eine Vorrichtung zur Herstellung von Bauteilen und Halbzeugen aus synthetischem Graphit oder aus keramischem Granulat zu schaffen, durch welches die im Graphitwerkstoff vorhandenen Anisotropien reduziert werden, ohne daß die Festigkeit des Werkstoffs gemindert wird.

Erfindungsgemäß wird diese Aufgabe durch die im kennzeichnenden Teil von Anspruch 1 und Anspruch 10 genannten Merkmale gelöst. Anspruch 15 betrifft ein entsprechend dem Verfahren von Anspruch 1 hergestelltes Bauteil bzw. Halbzeug.

### Vorteile der Erfindung

Das erfindungsgemäße Verfahren gemäß Anspruch 1 hat den Vorteil, daß sich wegen des Vorpressvorgangs wie beim Gesenkpressen die Graphitpartikel innerhalb des vorverdichteten Werkstoffbfocks zunächst quer zur Preßrichtung ausrichten. Beim Auspressen drehen sich die Graphitpartikel wegen der eingestellten, geringeren Fließfähigkeit des Mischguts im Bereich der verengten Austrittsöffnung der Strangpresse oder des Extruders von ihrer ursprünglichen Querausrichtung nur um einen geringen Winkelbetrag in Preßrichtung, so daß sie schließlich im wesentlichen schräg oder spiralförmig zur Mittelachse des gefertigten Bauteils angeordnet sind.

Da die durch die Ausrichtung der Partikel definierte Vorzugsrichtung der Wärmeleitungs- und Festigkeitseigenschaften nun weder rein quer noch rein parallel zur Mittelachse des gepreßten Bauteils sondern schräg hierzu liegt, ergibt sich ein neuartiges Graphitmaterial mit wesentlich geringerer Anisotropie als bisher. Denn einerseits besitzen die schräg ausgerichteten Partikel eine Komponente quer zur Preßrichtung, was z.B. günstig für die radiale Wärmeleitfähigkeit von nach dem erfindungsgemäßen Verfahren hergestellten Wärmetauscher-Graphitrohren ist. Andererseits wird durch die hierzu komplementäre, in Preßrichtung weisende Komponente der Partikel verhindert, daß sich die Biegefestigkeit der Graphitrohre signifikant mindert.

Durch die in den Unteransprüchen 2 bis 9 aufgeführten Maßnahmen sind vorteilhafte Weiterbildungen und Verbesserungen des im Patentanspruch 1 angegebenen Verfahrens möglich.

Eine besonders zu bevorzugende Ausführungsform der Erfindung sieht vor, daß die Strangpresse einen Vorratsraum mit einer Zuführöffnung zum Zuführen von Mischgut aufweist, die einer Anfangs- und einer Endstellung eines den Vorratsraum verkleinerbaren Preßkolbens zwischengeordnet ist, wobei die Formgebung des Mischguts die folgenden, einen Zyklus bildenden Schritte umfaßt:
a) Eindosieren von Mischgut in den Vorratsraum mit Hilfe einer Dosiereinrichtung bis dieser vollständig befüllt ist, wenn sich der Preßkolben in der Anfangstellung befindet,
b) Quasi-statisches Vorpressen des Mischguts im Vorratsraum durch langsamen Vorschub des Preßkolbens, um die Partikel quer zur Preßrichtung auszurichten,
c) Auspressen eines Volumens von vorverdichtetem Mischgut aus der Austrittsöffnung, das kleiner ist als das ursprünglich im Vorratsraum befindliche Volumen, wodurch bei Erreichen der Endstellung des Preßkolbens im Vorratsraum ein .vorverdichtetes Restvolumen verbleibt,
d) Zurückfahren des Preßkolbens in die Anfangsstellung und Eindosieren von neuem Mischgut in einen Zwischenraum zwischen dem vorverdichteten Restvolumen und dem Preßkolben bis der Vorratsraum wieder vollständig befüllt ist,
e) Fortfahren mit Schritt b).

Wegen der schnellen und quasi kontinuierlichen Nachfüllmöglichkeit mittels der Zuführöffnung können auch geringe Mengen an Preßgut durch einen einzigen Preßhub wirtschaftlich verpreßt werden. Hohe Preßkräfte sind demnach nicht mehr notwendig, so daß die Fließfähigkeit des Mischguts gezielt reduziert werden kann. Wegen der inneren Fließbehinderung des Preßguts kann sich kein ausgeprägtes Strömungsfeld ausbilden, in weichem sich die Graphit- bzw. Granulatpartikel parallel zur Strömungsrichtung ausrichten könnten. Vielmehr wird, wie bereits vorangehend beschrieben, das Preßgut näherungsweise statisch vorgepreßt, wodurch sich die Graphitpartikel quer zur Preßrichtung ausrichten, bevor es den Vorratsraum durch die Austrittsöffnung verläßt. Aufgrund der inneren Fließbehinderung der vorgepreßten Masse findet beim Durchströmen der verengten Austrittsöffnung deren vorteilhafte Schrägausrichtung statt.

Gemäß einer weiteren Ausführungsform ist vorgesehen, daß die anfangs notwendige Ausrichtung der Partikel quer zur Preßrichtung
dadurch bewerkstelligt wird, daß das Mischgut vorzugsweise mittels einer Gesenkpresse zu einem blockartigen Vorpressling vorverdichtet und der Vorpressling anschließend in einen Vorratsraum eines Kolbenextruders eingesetzt wird, um ihn dann zur Formgebung durch die Austrittsöffnung zu pressen.

Weitere besonders zu bevorzugende Maßnahmen sehen vor, daß das Mischgut durch Mischen einer mindestens eine Korngrößenfraktion von Petrolkoks und/oder Graphitgranulat beinhaltenden Ausgangsmasse mit einem Bindemittel gewonnen wird, und dem Mischgut zusätzlich Kohlenstoffasern zugemischt werden. Durch Zumischen von Kohlenstoffasern kann in vorteilhafter Weise die Festigkeit der Graphitbauteile gesteigert werden.

Ein Zusatz von handelsüblichen Preßhilfsmitteln unterstützt die gewünschte innere Fließbehinderung der Masse dahingehend, daß insbesondere die Wandreibung der Masse mit der Zylinderwand herabgesetzt wird und so eine Propfenströmung entsteht, welche die Ausrichtung der Partikel in Preßrichtung behindert.

Die bei der Herstellung von Graphitbauteilen verwendeten Bindemittel haben die Aufgabe, durch hohes Benetzungsvermögen die Feststoffpartikel untereinander zu verbinden und damit plastisch verformbar zu machen sowie die erforderliche Festigkeit der Bauteile sicherzustellen. Das Bindemittel wird üblicherweise den z.B. aus Petrolkoks oder Graphitgranulat bestehenden Feststoffen in flüssiger Form zugesetzt. Die Menge an Bindemittel wird beim Stand der Technik so hoch dosiert, daß innerhalb des Vorratsraumes der Strangpresse ein relativ niedriger Staudruck erzeugt wird. Ein Mischgut mit dem üblichen hohen Bindemittetanteil hat jedoch den Nachteil, daß aufgrund der guten Fließfähigkeit der Masse die Ausrichtung der Partikel in Preßrichtung besonders gut erfolgt und auf diese Weise die Ausbildung eines stark anisotropen Preßteils unterstützt wird. Darüber hinaus schrumpft das Material beim anschließenden Pyrolisieren stark. Die starke Schrumpfung wirkt sich darüber hinaus ungünstig auf die Verstärkungswirkung der eingebrachten Carbonfasem aus.

Entsprechend ist gemäß einer Weiterbildung der Erfindung der Massenariteil des zugemischten Bindemittels niedrig und beträgt zwischen 5 und 32 Gew% an der Gesamtmasse des Mischguts. Dies hat den Vorteil, daß das Mischgut einerseits bei der anschließenden Pyrolyse weniger schrumpft und andererseits weniger fließfähig ist, so daß die erwünschte Fließbehinderung des Mischguts durch einen geringeren Anteil an flüssigem Bindemittel wirkungsvoll unterstützt wird und die Tendenz der Graphitpartikel, sich parallel zur Strömungsrichtung auszurichten, sinkt. Beim späteren Pyrolisieren wird zudem wirksam verhindert, daß die in den aus dem Mischgut hervorgehenden Bauteilen vorhandenen Kohlenstofffasem aufgrund der Schrumpfung wirkungslos werden.

Eine weitere Fortbildung des erfindungsgemäßen Verfahrens sieht vor, daß das Mischen der Ausgangsmasse und des Bindemittels sowie weiterer Rohstoffe zum Mischgut durch einen Mischer mit geringer Scherwirkung, z.B. einem Taumelmischer oder einem Rhönradmischer erfolgt. Hierdurch ergibt sich ein besonders schonender Mischvorgang, insbesondere wird vermieden, daß die zur Erhöhung der Bauteilfestigkeit zugesetzten Kohlenstoffasern abgeschert werden oder abbrechen. Darüber hinaus erfolgt die Durchmischung der einzelnen Bestandteile mit Hilfe von Taumelmischem besonders gründlich, so daß sich keine unerwünschten Ansammlungen von Kohlenstoff-Stapelfasern bilden.

Schließlich ist gemäß einer Weiterbildung des Verfahrens von Anspruch 1 vorgesehen, daß die Ausgangsmasse vor dem Mischen derart zerkleinert und gesiebt wird, daß sie im wesentlichen eine erste Korngrößenfraktion mit Korngrößen größer 0 mm und kleiner als 60 µm und mit einem Massenanteil von 20 bis 100 Gew % an der Ausgangsmasse beinhaltet, und eine zweite Korngrößenfraktion mit Korngrößen von 60 µm bis 750 µm und einem Massenanteil von 0 Gew% bis 34 Gew% an der Ausgangsmasse sowie eine dritte Korngrößenfraktion mit Korngrößen größer als 750 µm bis 2000 µm und einem Massenanteil von 0 Gew% bis 46 Gew% an der Ausgangsmasse. Durch das Erzeugen einer mit gröberen Körnern durchsetzten Ausgangsmasse ist das hieraus hervorgehende Mischgut weniger viskos und infolgedessen tritt beim anschließenden Preßvorgang eine höhere innere Reibung auf, die ein rasches Abfließen des Mischguts aus der Austrittsöffnung der Strangpresse verhindert Hierdurch wird die erwünschte Vorverdichtung des Mischguts wirkungsvoll unterstützt.

Die Vorrichtung gemäß Anspruch 10 hat den Vorteil, daß wegen der schnellen und quasi kontinuierlichen Nachfüllmöglichkeit der Strangpresse mittels der Zuführöffnung mit einem einzigen Preßhub auch geringere Mengen an Preßgut wirtschaftlich verpreßt werden können und demzufolge mit gegenüber dem Stand der Technik geringeren Kräften gepreßt werden kann. Eine Erhöhung der Fließfähigkeit des Mischguts zur Begrenzung der Preßkräfte ist demnach nicht mehr notwendig. Vielmehr kann im Gegenteil die Fließfähigkeit des Mischguts gezielt reduziert werden, um die Ausbildung eines ausgeprägten Strömungsfeldes zu verhindern, in welchem sich die Graphitpartikel in unerwünschter Weise parallel zur Strömungsrichtung ausrichten könnten. Darüber hinaus ist mit einem Verhältnis D/d des Durchmessers D des Vorratsraumes zum Durchmesser d der Austrittsöffnung kleiner gleich 2,5 die gewünschte Partikelausrichtung am besten erzielbar.

Durch die in den Unteransprüchen 11 bis 14 aufgeführten Maßnahmen sind vorteilhafte Weiterbildungen und Verbesserungen der im Patentanspruch 10 angegebenen Vorrichtung möglich.

Übliche Strangpressen erstrecken sich in vertikaler Richtung, um nach Entfernen des Preßkolbens den Vorratsraum von oben gleichmäßig mit Mischgut befüllen zu können. Um Endlosbauteile, z.B. Rohre auspressen zu können, muß allerdings die Bauhöhe solcher vertikaler Strangpressen entsprechend groß sein.

Demgegenüber sieht eine bevorzugte Weiterbildung der Vorrichtung von Anspruch 10 vor, daß die Längserstreckung der Strangpresse im wesentlichen parallel zur Horizontalen und die Zuführöffnung des Vorratsraumes im wesentlichen quer dazu angeordnet ist. Wegen der horizontalen Anordnung der Strangpresse ist deren Bauhöhe vorteilhaft gering und Endlosbauteile können in nahezu beliebiger Länge ausgepreßt werden. Zum andern ist durch die in vertikaler Richtung erfolgende Befüllung des Vorratsraumes sichergestellt, daß sich das Mischgut dort gleichmäßig verteilt.

### Zeichnungen

Ausführungsbeispiele der Erfindung sind in den Zeichnungen dargestellt und in der nachfolgenden Beschreibung näher erläutert. Es zeigen :
- Fig.1: ein Fließschema eines Teils des Fertigungsprozesses von Graphitbauteilen ;
- Fig.2: eine schematische Schnittdarstellung durch eine erfindungsgemäße Strangpresse zum Pressen des Mischguts in bevorzugter Ausführungsform mit vollständig gefülltem Vorratsraum;
- Fig.3: die Strangpresse von Fig.2 während der Vorverdichtung;
- Fig.4: die Strangpresse von Fig.2 während der Extrusion;
- Fig.5: die Strangpresse von Fig.2 während des Nachfüllvorgangs;
- Fig.6: einen Kolbenextruder zur Formgebung des Mischguts;
- Fig.7: einen Einschneckenextruder zur Formgebung des Mischguts.

### Beschreibung der Ausführungsbeispiele

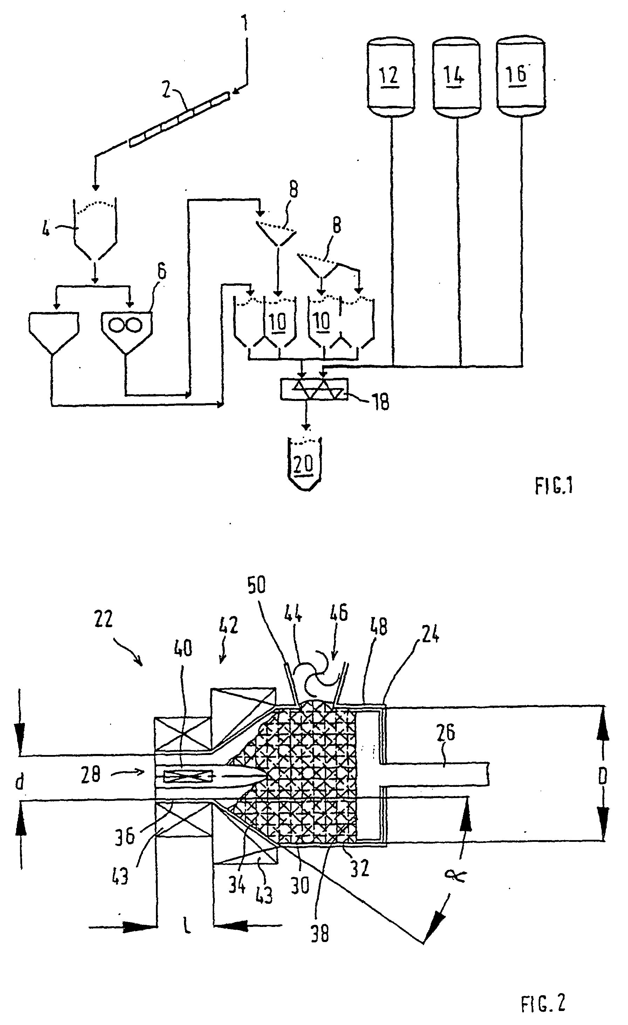

Im Fließschema nach Fig.1 sind die ersten Fertigungsschritte des erfindungsgemäßen Verfahrens zur Herstellung von Bauteilen und Halbzeugen aus Graphit oder keramischem Granulat dargestellt, wobei gemäß einem bevorzugten Ausführungsbeispiel Graphitrohre zur Verwendung in Wärmetauschern gefertigt wurden. Hierzu wurden zahlreiche Fertigungsversuche mit unterschiedlichen Rohstoffen und Verfahrensschritten durchgeführt, von welchen im folgenden nur einige exemplarisch beschrieben sind.

Als Ausgangsmasse wurde beispielsweise Petrolkoks verwendet, welcher zunächst calciniert, d.h. bei 1200 bis 1400 Grad Celsius beispielsweise in einem Drehrohr- oder Tellerofen 2 geglüht und dann in einem Silo 4 zwischengelagert wurde. In einem nachfolgenden Schritt wurde die Ausgangsmasse z.B. durch Kreiselbrecher 6 oder Schlagmühlen derart zerkleinert und in Sieben 8 gesiebt, daß sich Fraktionen unterschiedlicher Korngrößen ergaben, die in voneinander getrennten Bunkern 10 zwischengelagert wurden.

In der nachfolgenden Tabelle 1 sind anhand von drei Versuchsbeispielen jeweils die Granulometrie von zerkleinertem und gesiebtem Petrolkoks und Graphitgranulat aufgeführt und die Korngrößen jeweils in vier Bereiche, 0 - 60 µm, 60 - 200 µm, 200 - 400 µm und 400 - 750 µm klassifiziert. Gemäß einem ersten Ausführungsbeispiel, in welchem ausschließlich Petrolkoks als Ausgangsmasse diente, hatten die größten Partikel einen Durchmesser zwischen 400 µm und 750 µm, wobei 45 Gew% (Gewichtsprozent) Massenanteil kleiner als 60 µm und 55 Gew% Massenanteil der Ausgangsmasse größer/gleich 60 µm waren. Ebenfalls Petrolkoks als Rohstoff fand bei einem zweiten Ausführungsbeispiel Verwendung, bei welchem die größten Partikel etwas kleiner 400 µm waren und der Massenanteil von Partikeln kleiner als 60 µm 44 Gew% und derjenige von Partikeln größer/gleich 60 µm 56 Gew% betrug. Schließlich erreichten die größten Partikel bei der Verwendung von Graphitgranulat als Ausgangsstoff eine Größe von 750 µm, wobei der Massenanteil von Partikeln größer/gleich 60 µm 45 Gew% und der Anteil der Partikel kleiner als 60 µm 56 Gew% betrug.

**Tabelle 1 :**

| Granulometrie der Ausgangsmasse anhand von Beispielen | | | | |
|---|---|---|---|---|
| Fraktion [µm] | 0 - 60 | 60 - 200 | 200 - 400 | 400 - 750 |
| Petrolkoks, Massenanteil [Gew%] | 45 | 21 | 14 | 20 |
| Petrolkoks, Massenanteil [Gew%] | 44 | 32 | 24 | 0 |
| Graphitgranulat, Massenanteil [Gew%] | 55 | 17 | 18 | 10 |

In der nachfolgenden Tabelle 2 sind mit "A" die im Laufe der Versuche ermittelten minimal möglichen Korngrößen und mit "B" die maximal möglichen Korngrößen bezeichnet, mit welchen eine noch ausreichende Bauteilfestigkeit erzielbar bzw. eine Formgebung des Graphitmaterials gerade noch möglich war. Demnach nahmen die Komgrößenfraktionen zwischen 0 und 60 µm bei der kleinstmöglichen Körnung A zusammen 100 Gew% Massenanteil an der Ausgangsmasse ein, gröbere Kömungen als 60 µm kamen dagegen nicht vor. Demgegenüber ergab sich bei der größtmöglichen Körnung B ein wesentlich breiteres Band von 0 bis 2000 µm, wobei die feinsten Fraktionen zwischen 0 und 60 µm zusammen 20 Gew% Massenanteil, die mittleren Fraktionen von 60 µm bis 750 µm zusammen 34 Gew% Massenanteil und die gröbsten Fraktionen zwischen 750 µm und 2000 µm zusammen 46 Gew% Massenanteil der Ausgangsmasse ausmachten.

**Tabelle 2 :**

| Maximale und minimale Granulometrie der Ausgangsmasse | | | | | | | | |
|---|---|---|---|---|---|---|---|---|
| Fraktion [µm] | 0 -10 | 10-40 | 40 -60 | 60-200 | 200 -400 | 400 -750 | 750-1000 | 1000-2000 |
| A Anteile [Gew %] | 60 | 40 | 0 | 0 | 0 | 0 | 0 | 0 |
| B Anteile [Gew%] | 3 | 10 | 7 | 15 | 10 | 9 | 21 | 25 |

Wie aus Tabelle 3 und Fig.1 hervorgeht, wurde der Petrolkoks bzw. das Graphitgranulat 1 im Anschluß an seine Zerkleinerung und Siebung mit einem Bindemittel 12, beispielsweise Phenolharz, Novolak®, Typ SP 222, Fließstrecken 20 - 100 mm, feingemahlen mit einem Zusatz von 8% Hexamethylentetramin (Hexa), der Firma Bakelite AG, Deutschland, oder Pech der Sorte BX 95, EP > 30 Grad Celsius, der Firma Rütgers, Deutschland, vermischt Zusätzlich wurden bei einigen Versuchen der Ausgangsmasse geschlichtete Kohlenstoff-Stapelfasern 14, vorzugsweise SIGRAFIL® - Fasem des Typs C-25-S006 EPY der Firma SGL Technik GmbH, Deutschland, mit einem Durchmesser von 8 µm und einer Länge von 6 mm zugesetzt. Schließlich wurde bei einigen der Versuche zusätzlich ein Preßhilfsmittel 16 zur Reduzierung der Wandreibung zugemischt, z.B. in Form von Paraffinöl mit einer Viskosität von 60 mPa·s bei 20 Grad Celsius oder in Form von Stearin®, Laborprodukt "Stearinsäure". Gemischt wurde mit einem langsam laufenden Rhönradmischer 18 mit Mischschikanen in Form von Lochblechkreuzen bei Raumtemperatur bzw. mit einem Zweiarmmischer bei einer Temperatur von 80 Grad Celsius, wobei man als Resultat ein preßfertiges Mischgut 20 erhielt.

In Tabelle 3 sind darüber hinaus die Massenanteile der Rohstoffe des Mischguts 20 dargestellt, wie sie bei den Versuchen verwendet wurden. Demgemäß betrug der Massenanteil der aus den verschiedenen Korngrößenfraktionen bestehenden Ausgangsmasse zwischen 65 und 95 Gew%, und der Massenanteil des Bindemittels zwischen 5 und 32 Gew% an der Gesamtmasse des Mischguts 20. Soweit Kohlenstoff-Stapelfasern 14 zugemischt wurden, betrug deren Massenanteil 0 bis 15 Gew%, im Falle des Preßhilfsmittels 16 0 bis 5 Gew%.

Die Formgebung des Mischguts 20 erfolgte durch eine in Fig.2 im Querschnitt dargestellte Strangpresse 22 mit einem innerhalb eines Pressengehäuses 24 längsbeweglichen Preßkolben 26, der einen in eine demgegenüber verengte Austrittsöffnung 28 des Pressengehäuses 24 mündenden, mit Preßgut befüllbaren und durch seine Preßbewegung verkleinerbaren Vorratsraum 30 begrenzt. Die Längserstrekkung der Strangpresse 22 ist im wesentlichen parallel zur Horizontalen.

Das Pressengehäuse 24 umfaßt einen den Preßkolben 26 führenden zylindrischen Abschnitt 32 mit Durchmesser D und einen trichterförmigen Abschnitt 34, der beispielsweise endseitig mit einem die Austrittsöffnung 28 bildenden Rohrmundstück 36 mit Durchmesser d versehen ist.

**Tabelle 3 :**

| Art und Massenanteile der Komponenten des Mischguts | | |
|---|---|---|
| Rohstoff | Eigenschaft | Bereich |
| Petrolkoks / Graphitgranulat | Granulometrie | Maximale Komgröße 0,04 bis 2mm |
| | Menge | 65 - 95 Gew% |
| Bindemittel | Art | Pech, EP > 30°C, Phenolharze, Phenolharz-Novolake Fließstrecke 20 - 100 mm |
| | Menge | 5 - 32 Gew% |
| Kohlenstoffasem | Faserlängen | 0,2 - 15 mm |
| | Vorbehandlung | Geschlichtet, Schlichte geeignet für Einbindung in Pech und/oder Phenolharze |
| | Menge | 0 - 15 Gew% |
| Presshitfsmittel | Art | Paraffinöl, Stearin® |
| | Menge | 0 - 5 Gew% |

Der Vorratsraum 30 wird im wesentlichen durch einen vom zylindrischen und trichterförmigen Abschnitt 32, 34 umschlossenen und von einer zur Austrittsöffnung 28 weisenden Preßfläche 38 des Preßkolbens 26 begrenzten Raum gebildet und ist maximal groß, wenn der Preßkolben 26 sich in einer von der Austrittsöffnung 28 maximal entfernten, in Fig.2 dargestellten Anfangsposition befindet.

Zur Rohrformung ist innerhalb des Rohrmundstücks 36 ein Gegendorn 40 mit Radialabstand zu dessen innerer Umfangsfläche koaxial aufgenommen, welcher mit seinem zum Preßkolben 26 weisenden Ende zumindest teilweise in den zylindrischen Abschnitt 32 des Pressengehäuses 24 hineinragt und sich dort verjüngt. Der trichterförmige Abschnitt 34, das Rohrmundstück 36 und der Gegendorn 40 bilden zusammen ein Formgebungsmundstück 42 der Strangpresse 22. Das Formgebungsmundstück 42 steht mit Heizeinrichtungen 43 in wärmeübertragender Verbindung, zur Erwärmung von durch das Formgebungsmundstück 42 hindurchgepreßtem Mischgut, wobei die Heizeinrichtung 43 des Rohrmundstücks 36 von der des trichterförmigen Abschnitts 34 wärmeisoliert ist.

Das Verhältnis D/d des Durchmessers D des zylindrischen Abschnitts 32 des Pressengehäuses 24 zum Durchmesser d des Rohrmundstücks 36 ist kleiner gleich 2,5. Das Verhältnis des Durchmessers d des Rohrmundstücks 36 zu seiner Länge I ist vorzugsweise kleiner gleich 1 und der trichterförmige Abschnitt 32 weist einen Kegelwinkel α von 35 Grad auf.

Der Vorratsraum 30 hat eine separate, mit einer Dosiereinrichtung 44 in Verbindung stehende Zuführöffnung 46, über welche ihm Preßgut dosiert zuführbar ist. Die Zuführöffnung 46 ist als Durchgangsbohrung in einer Wandung 48 des zylindrischen Abschnitts 32 des Pressengehäuses 24 quer zur horizontalen Längserstreckung der Strangpresse 22 ausgebildet und durch einen trichterförmigen Einfüllstutzen 50 nach radial außen hin fortgeführt, in welchem eine die Dosiereinrichtung bildende Zellradschleuse 44 aufgenommen ist.

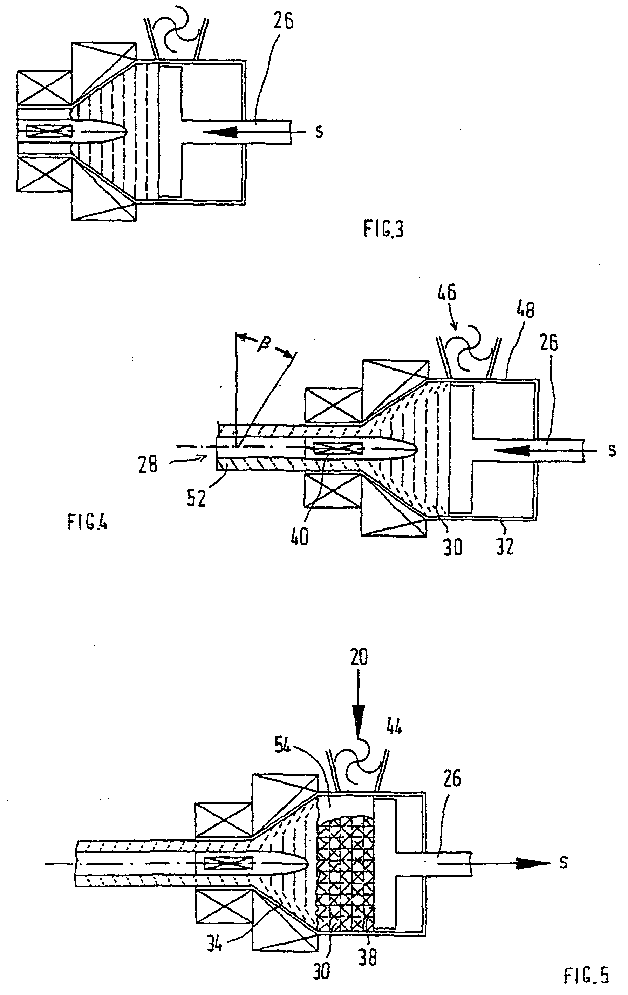

Im folgenden sollen nun die einzelnen, in Fig.2 bis Fig.5 in schematischer Weise veranschaulichten Schritte erläutert werden, aus welchen sich ein Preßvorgang zusammensetzt. Zu Beginn befindet sich der Preßkolben 26 gemäß Fig.2 in einer von der Austrittsöffnung 28 maximal entfernten Anfangsposition, so daß der Vorratsraum 30 seine maximale Größe einnimmt. In einem ersten Schritt wird über die Zellradschleuse 44 Mischgut mit regellos ausgerichteten Partikeln in den Vorratsraum 30 eindosiert, bis dieser vollständig gefüllt ist. Anschließend wird das eindosierte Mischgut durch Vorschub des Preßkolbens 26, beispielsweise mit einer kontinuierlichen Vorschubgeschwindigkeit s von maximal 4 m/min, im Vorratsraum 30 komprimiert, wie in Fig.3 gezeigt ist. Wegen der hohen Anteile an grobkömigen Fraktionen des zerkleinerten Graphitgranulats bzw. Petrolkokses, die eine relativ hohe innere Reibung im Preßgut bedingen, wird zunächst verhindert, daß Mischgut durch die verengte Austrittsöffnung abfließen kann. In der Folge ergibt sich eine quasi-statische Verdichtung, weshalb sich die im Mischgut zuvor regellos ausgerichteten Partikel, z.B. Kohlenstoffasem und Graphitpartikel, ähnlich wie beim Pressen in einer Gesenkpresse, nun quer zur Vorschub- oder Preßrichtung ausrichten können.

Da sich der Preßkolben 26 mit beispielsweise kontinuierlicher Vorschubgeschwindigkeit auf die Austrittsöffnung 28 zu bewegt, ergibt sich nach einer gewissen Zeit die in Fig.4 dargestellte Situation, in welcher er seine Endposition erreicht hat und vorverdichtetes Mischgut den Gegendorn 40 passierend durch die Ausrittsöffnung 28 abfließt, wodurch es zu einem endlosen Rohr 52 geformt wird. Durch die innere Fließbehinderung richten sich die zuvor quer zur Preßrichtung ausgerichteten Partikel innerhalb des Mischguts derart um, daß sie eine geringfügig geänderte, schräge Stellung einnehmen und bezogen auf ihre Längserstreckung nun eine Richtungskomponente in Preßrichtung aufweisen. Unter Schräglage soll hier eine Winkelausrichtung β größer als 0 Grad und kleiner/gleich 75 Grad zu einer Ebene senkrecht zur Längsachse des Rohres verstanden werden.

Um eine ausreichende Wärmeleitfähigkeit der Graphitrohre 52 in radialer Richtung zu erzielen, ist eine zu starke Umrichtung der Partikel in Richtung der Längsachse ungünstig. Zweckmäßig ist dafür Sorge zu tragen, daß die auf das vorverdichtete Mischgut wirkende äußere Reibung möglichst niedrig ist, die innere Reibung dagegen möglichst hoch ist, z.B. durch Zugabe des Preßhilfsmittels 16. Es wird die Ausbildung einer Pfropfenströmung im Inneren des Vorratsraumes 30 angestrebt.

Die Zufuhröffnung 46 ist vorzugsweise der Anfangsstellung und der Endstellung des Preßkolbens 26 zwischengeordnet, so daß er in seiner Endstellung gemäß Fig.4 die Zuführöffnung 46 zumindest teilweise passiert hat und sich im Bereich des Endes des zylindrischen Abschnitts 32 des Pressengehäuses 24 befindet, wodurch der Vorratsraum 30 von der Zuführöffnung 46 abgekoppelt wird. Der Kolbenhub ist vorzugsweise so bemessen, daß ein Volumen an gepreßtem Mischgut aus der Austrittsöffnung 28 herausgepreßt wird, das kleiner ist als ursprünglich in den Vorratsraum 30 eindosierte Mischgutvolumen, so daß ein in den trichterförmigen Abschnitt 34 des Pressengehäuses 24 verpreßtes Restvolumen an Mischgut im Vorratsraum 30 verbleibt.

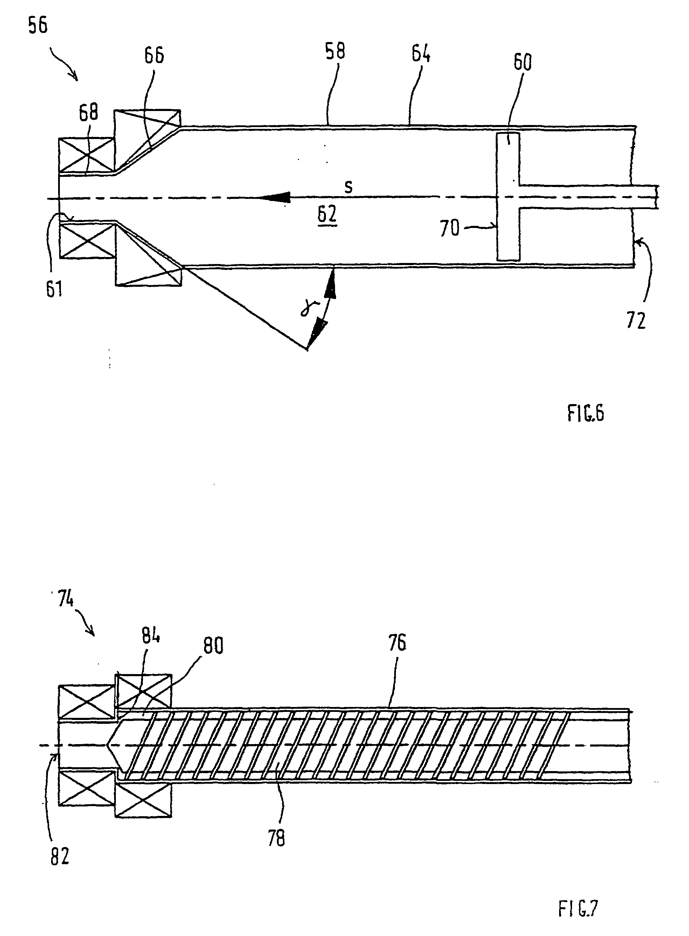

Schließlich wird der Preßkolben 26 rasch in seine Anfangsposition zurückgefahren, wodurch die Zuführöffnung 46 vollständig freigegeben wird, wie anhand von Fig.5 gezeigt ist In den nun zwischen dem im trichterförmigen Abschnitt 34 verbliebenen Restvolumen des Mischguts und der zur Austrittsöffnung 28 weisenden Preßfläche 38 des Preßkolbens 26 entstandenen Zwischenraum 54 wird nun mittels der Dosiereinrichtung 44 neues Mischgut 20 eingefüllt bis der Vorratsraum 30 wieder vollständig befüllt ist. Da das Mischgut-Restvolumen des vorangehenden Preßvorgangs im trichterförmigen Abschnitt 34 bereits vorverdichtet ist, bildet es eine Abflußbarriere für das neu eingefüllte Mischgutvolumen, gegen welches der Preßkolben 26 nun von der anderen Seite her drückt. Mit fortschreitender Kolbenbewegung wird daher zunächst das neu eingefüllte, noch gering verdichtete Mischgutvolumen komprimiert, so daß sich die Partikel quer ausrichten können, bevor das im tricherförmigen Abschnitt 34 verbliebene, einen Pfropf darstellende Restvolumen des vorangehenden Preßvorgangs ausgepreßt wird. Nachdem der Preßkolben 26 seine Endstellung erreicht hat, beginnt der beschriebene Zyklus von neuem.

Neben der vorstehend beschriebenen Strangpresse 22 wurde zur Formgebung von Mischgut auch ein in Fig.6 gezeigter Kolbenextruder 56 benutzt, mit einem innerhalb eines Extrudergehäuses 58 längsbeweglichen Preßkolben 60, der einen in eine demgegenüber verengte Austrittsöffnung 61 mündenden, mit Preßgut befüllbaren und durch seine Preßbewegung verkleinerbaren Vorratsraum 62 begrenzt. Das Extrudergehäuse 58 umfaßt einen den Preßkolben 60 führenden zylindrischen Abschnitt 64 und einen trichterförmigen Abschnitt 66 mit einem Kegelwinkel γ von vorzugsweise 30 Grad, der endseitig mit einem die Austrittsöffnung 61 bildenden Rohrstummel 68 versehen ist, wobei der Vorratsraum 62 im wesentlichen durch den vom zylindrischen und trichterförmigen Abschnitt 64, 66 umschlossenen und von einer zur Austrittsöffnung 61 weisenden Preßfläche 70 des Preßkolbens 60 begrenzten Innenraum gebildet wird. Gegenüber der vorangehend beschriebenen Strangpresse 22 ist der Vorratsraum 62 wesentlich länger, so daß zum Pressen größere Kräfte notwendig sind und die Vorschubgeschwindigkeit s ebenfalls höher ist.

Bei den Versuchen, bei welchen der Kolbenextruder 56 Verwendung fand, wurde das Mischgut zunächst in einer nicht dargestellten, an sich bekannten Gesenkpresse statisch vorverdichtet, um eine Ausrichtung der Graphitpartikel und Kohlenstoffasern quer zur Preßrichtung zu erreichen. Anschließend wurde der vorverdichtete und an die Größe des Vorratsraumes 62 des Kolbenextruders 56 angepaßte Vorpressling in diesen eingebracht, indem der Preßkolben 60 durch eine endseitige, mit der Kolbenachse koaxiale, hintere Öffnung 72 gegen die Preßrichtung herausgezogen und danach der Vorpressling durch diesselbe Öffnung in den Vorratsraum 62 eingesetzt wurde. Durch den im Anschluß stattfindenden Kolbenvorschub und das hieraus resultierende Auspressen von Mischgut aus der Austrittsöffnung 61 wurden die Partikel analog wie bei der vorangehend beschriebenen Strangpresse 22 in eine Schräglage umgerichtet.

Fig. 7 zeigt einen Einschneckenextruder 74, wie er zur Formgebung des Mischguts bei einigen der Versuche eingesetzt wurde. Anstatt eines Preßkolbens weist der Einschneckenextruder 74 eine innerhalb eines Extrudergehäuses 76 koaxial rotierende Preßschnecke 78 auf.

Tabelle 4 gibt eine Übersicht über die bei 17 Versuchen zur Herstellung von Graphitrohren verwendeten und erzielten Parameter. Beispielsweise wurde bei dem mit der laufenden Nummer 8 (Ifd. Nr.) bezeichneten Versuch ein Mischgut, dessen Gesamtmasse aus 87 Gew% Graphit mit einer maximalen Korngröße von 0,75 mm und aus 10 Gew% Bindemittel in Form von Novolak, 1 Gew% Paraffinöl, sowie 2 Gew% Kohlenstoffasem der Länge 6mm bestand, mit der Strangpresse 22 mit beheiztem Formgebungsmundstück 42 gemäß dem in Fig.2 bis Fig. 5 dargestellten Verfahren zu einem Graphitrohr verpreßt. Die Mischung der dosierten Einzelkomponenten zu einem Mischgut erfolgte mit dem Rhönradmischer 18 (Fig.1) bei Raumtemperatur. Die relative Fließfähigkeit des Mischguts betrug 0,38. Nach der Formgebung durch die Strangpresse 22 wurde das Graphitrohr in einem elektrisch beheizten Ofen unter Schutzgasspülung (Stickstoff) bis 800 Grad Celsius gebrannt (verkokt).

Ergebnis von Versuch Nr.8 waren Graphitrohre mit einer Wärmeleitfähigkeit von 84 W/(m x K) in Preß- oder Rohrlängsrichtung und 81 W/(m x K) quer zur Preß oder Rohrlängsrichtung, wobei sich ein Verhältnis der Wärmeleitfähigkeiten längs/quer zur Preßrichtung von 1,04 ergab. Der Winkel zwischen den Kohlenstoffasem und der Preß- oder Rohrlängsrichtung betrug etwa 85 Grad, d.h. die zunächst quer ausgerichteten Partikel (entspricht 90 Grad) wurden ca. 5 Grad in Preßrichtung umgerichtet. Der Berstdruck des Graphitrohres belief sich auf 68 bar.

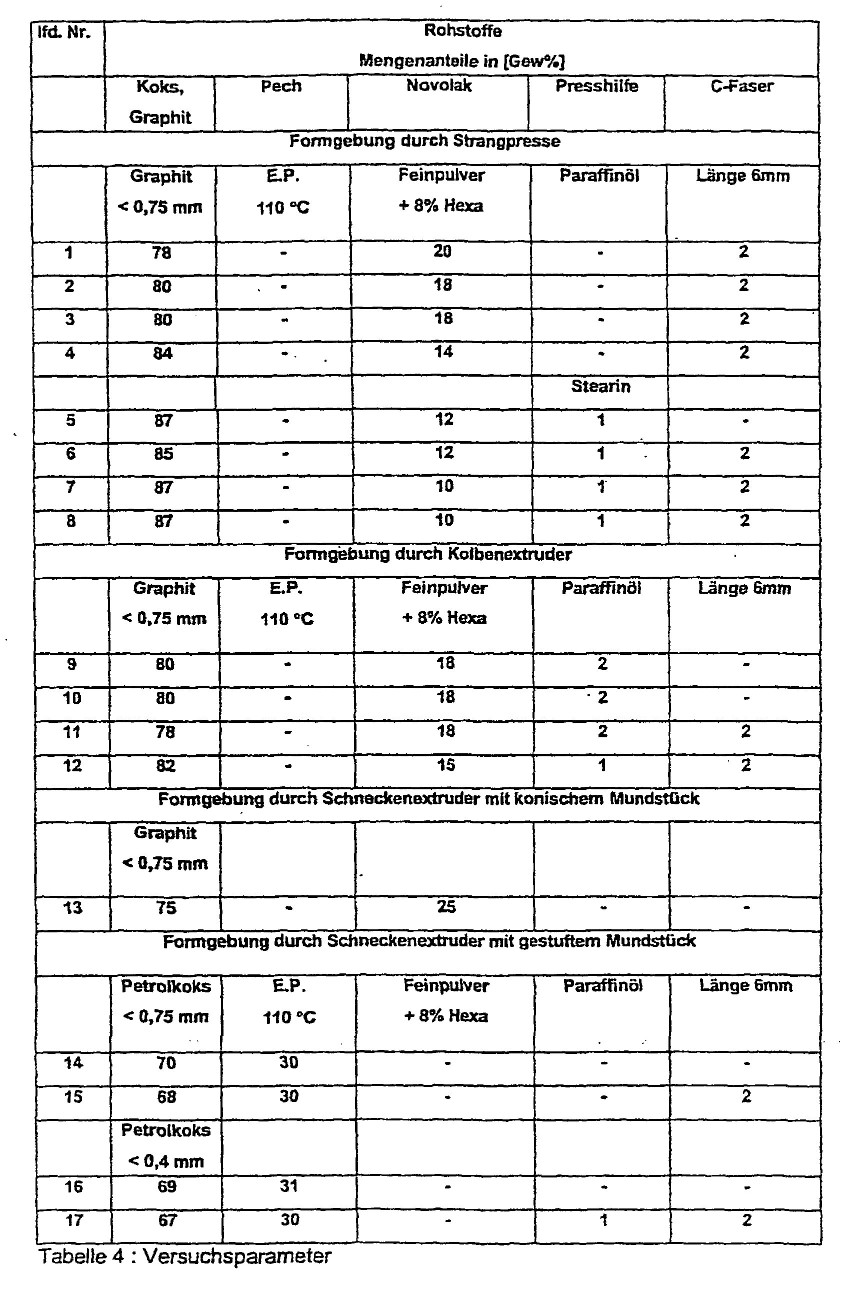

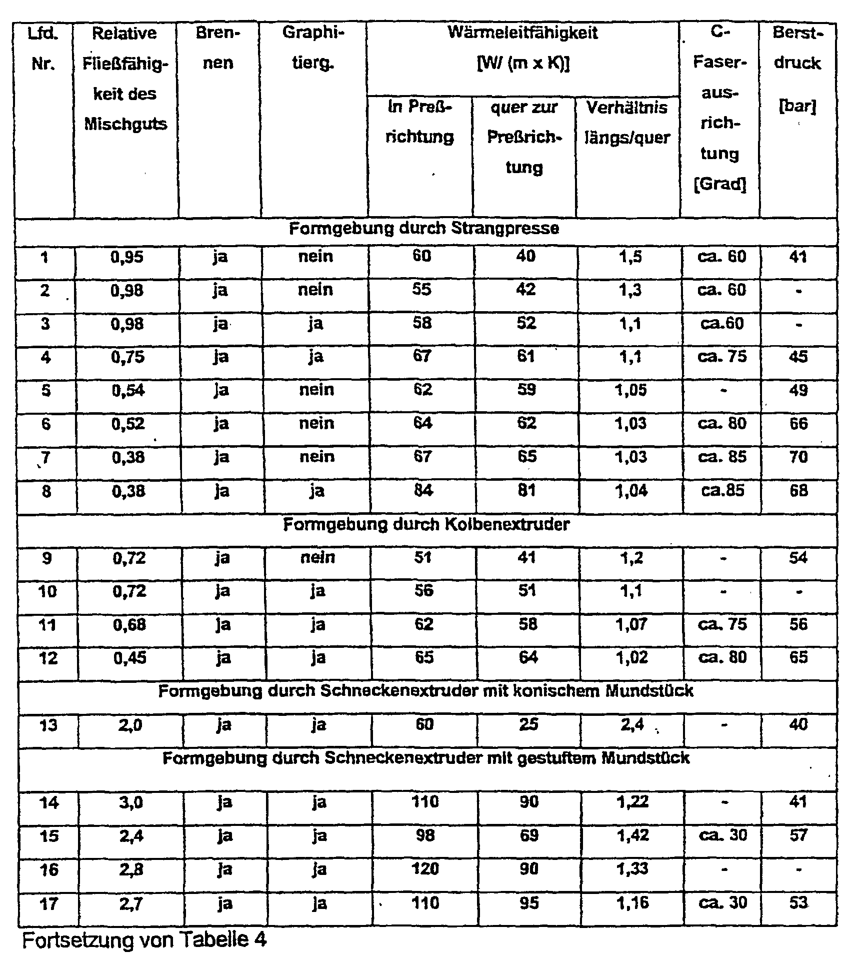

Zum Vergleich hierzu ist mit der Nummer 13 ein Referenzversuch bezeichnet, bei welchem die Formgebung mittels eines Schnekkenextruders gemäß dem Stand der Technik mit einem 30 Gradkonischen Formgebungsmundstück erfolgte. Dem Mischgut wurden keine Kohlenstoffasern zugemischt. Wie aus der Tabelle hervorgeht, ergaben sich Graphitrohre, bei welchen die Wärmeleitfähigkeit in Rohrlängsrichtung das 2,4-fache der Wärmeleitfähigkeit quer zur Rohrlängsrichtung betrug. Verglichen mit dem Versuch Nr.8 mit einem Verhältnis längs/quer von 1,04 daher eine deutlich höher ausgeprägte Werkstoff-Anisotropie.

Demgegenüber wurde zum Verpressen des Mischguts im Rahmen des Versuchs Nr.14 der Schneckenextruder 74 gemäß Fig.7 mit gestuftem anstatt mit konischem Formgebungsmundstück verwendet. Hierdurch konnte ein wesentlich günstigeres Verhältnis der Wärmeleitfähigkeit längs/quer zur Preßrichtung von 1,22 erzielt werden.

Ein vorteilhaft ausgeglichenes Wärmeleitfähigkeitsverhältnis von 1,02 wurde auch beim Versuch Nr.12 erzielt, bei welchem das Mischgut eine relative Fließfähigkeit von 0,45 aufwies und die Formgebung durch den Kolbenextruder 56 gemäß Fig.6 erfolgte, wobei das Mischgut in einer Gesenkpresse vorverdichtet wurde. Der Bindemittelanteil (Novolak) des Mischguts war mit 15 Gew% niedrig, außerdem wurden 2 Gew% Kohlenstoffasem und 1 Gew% Preßhilfsmittel zugesetzt. Als Winkel zwischen den im Graphitmaterial eingebetteten Kohlenstoffasern und der Rohrlängsrichtung ergab sich etwa 80 Grad, d.h. die aufgrund der Blockverdichtung in der Gesenkpresse zunächst quer ausgerichteten Partikel (entspricht 90 Grad) wurden um 10 Grad in Preßrichtung umgerichtet. Außerdem lag der Berstdruck mit 65 bar wesentlich höher als beim Stand der Technik (Versuch Nr.13).

Die Parameter der weiteren Versuche sind der Tabelle entnehmbar, wobei zusammenfassend festgestellt werden kann, daß die für die Graphitwerkstoffe des Stands der Technik typische ausgeprägte Anisotropie durch Anwendung des erfindungsgemäßen Verfahrens signifikant reduziert werden konnte. Im Ergebnis ergaben sich Graphitbauteile mit wesentlich höherer Wärmeleitfähigkeit quer zur Preßrichtung, durch die Zumischung von Kohlenstoffasern zum Mischgut konnten zudem Graphitrohre mit höheren Berstdrücken hergestellt werden.

## Patentansprüche

1. Verfahren zur Herstellung von Bauteilen und Halbzeugen aus syntheti-schem Graphit oder aus keramischem Granulat, insbesondere zur Herstellung von Graphitrohren (52), beinhaltend die Formgebung eines vorzugsweise Petrolkoks oder Graphitgranulat enthaltenden Mischguts (20) mittels einer Strangpresse (22) oder eines Extruders (56; 74), **gekennzeichnet durch** folgende Schritte:
a) Vorpressen des Mischguts (20) in statischer oder quasi-statischer Weise, wobei Fließbewegungen des Mischguts (20) derart unterbunden oder behindert werden, daß sich im Mischgut zuvor regellos ausgerichtete Partikel zunächst quer zur Preßrichtung ausrichten,
b) Auspressen des vorgepreßten Mischgut (20) aus einer Austrittsöffnung (28; 61; 82) der Strangpresse (22) oder des Extruders (56; 74), derart, daß sich die Partikel innerhalb des vorverdichteten Mischguts (20) aufgrund eingestellter Fließeigenschaften des Mischguts (20) ausgehend von ihrer Querausrichtung um einen Winkel (β) von maximal 75 Grad in Preßrichtung umrichten.

2. Verfahren nach Anspruch 1, **dadurch gekennzeichnet, daß** das Mischgut (20) vorzugsweise mittels einer Gesenkpresse zu einem blockartigen Vorpressling statisch vorgepreßt und der Vorpressling anschließend in einen Vorratsraum (62) eines Kolbenextruders (56) eingesetzt wird, um ihn zur Formgebung durch die Austrittsöffnung (61) zu pressen.

3. Verfahren nach Anspruch 1, **dadurch gekennzeichnet, daß** die Strangpresse (22) einen Vorratsraum (30) mit einer Zuführöffnung (46) zum Zuführen von Mischgut (20) aufweist, die einer Anfangs- und einer Endstellung eines den Vorratsraum (30) verkleinerbaren Preßkolbens (26) zwischengeordnet ist, wobei die Formgebung des Mischguts (20) die folgenden, einen Zyklus bildenden Schritte umfaßt :
a) Eindosieren von Mischgut in den Vorratsraum (30) mit Hilfe einer Dosiereinrichtung (44) bis dieser vollständig befüllt ist, wenn sich der Preßkolben (26) in der Anfangstellung befindet,
b) Quasi-statisches Vorpressen des Mischguts im Vorratsraum (30) durch langsamen Vorschub des Preßkolbens (26), um die Partikel quer zur Preßrichtung auszurichten,
c) Auspressen eines Volumens von vorverdichtetem Mischgut aus der Austrittsöffnung (28), das kleiner ist als das ursprünglich im Vorratsraum (30) befindliche Volumen, wodurch bei Erreichen der Endstellung des Preßkolbens (26) im Vorratsraum (30) ein vorverdichtetes Restvolumen verbleibt,
d) Zurückfahren des Preßkolbens (26) in die Anfangsstellung und Eindosieren von neuem Mischgut in einen Zwischenraum (54) zwischen dem vorverdichteten Restvolumen und dem Preßkolben (26) bis der Vorratsraum (30) wieder vollständig befüllt ist,
e) Fortfahren mit Schritt b).

4. Verfahren nach Anspruch 1, **dadurch gekennzeichnet, daß** die Formgebung des Mischguts (20) durch einen Einschneckenextruder (74) erfolgt, dessen Austrittsöffnung (82) in Preßrichtung gesehen durch mindestens eine Fließbewegungen des Mischguts (20) behindernde Stufe (84) verjüngt ist.

5. Verfahren nach einem der vorhergehenden Ansprüche, **dadurch ge-kennzeichnet, daß** das Mischgut (20) durch Mischen einer mindestens eine Korngrößenfraktion von Petrolkoks und/oder Graphitgranulat (1) beinhaltenden Ausgangsmasse mit zumindest einem Bindemittel (12) gewonnen wird, wobei die Ausgangsmasse einen Massenanteil von 65 bis 95 Gew% und das Bindemittel (12) einen Massenanteil zwischen 5 und 32 Gew% an der Gesamtmasse des Mischguts (20) hat.

6. Verfahren nach Anspruch 5, **dadurch gekennzeichnet, daß** dem Mischgut (20) vor dem Vorpressen zusätzlich Kohlenstoffasem (14) zugemischt werden, wobei diese einen Massenanteil von 0 bis 15 Gew% an der Gesamtmasse des Mischguts aufweisen.

7. Verfahren nach Anspruch 5 oder 6, **dadurch gekennzeichnet, daß** dem Mischgut (20) vor dem Vorpressen zusätzlich Preßhilfsmittel (16) zugemischt werden, wobei die Preßhilfsmittel einen Massenanteil von 0 bis 5 Gew% an der Gesamtmasse des Mischguts haben.

8. Verfahren nach einem der Ansprüche 5 bis 7, **dadurch gekennzeichnet, daß** das Mischen der Ausgangsmasse und des Bindemittels (16) sowie weiterer Rohstoffe durch einen langsam laufenden Mischer, vorzugsweise durch einen Taumelmischer oder durch einen Rhönradmischer (18) erfolgt.

9. Verfahren nach einem der Ansprüche 5 bis 8, **dadurch gekennzeichnet, daß** die Ausgangsmasse vor dem Mischen derart zerkleinert und gesiebt wird, daß sie im wesentlichen eine erste Korngrößenfraktion mit Korngrößen größer 0 mm und kleiner als 60 µm und mit einem Massenanteil von 20 bis 100 Gew % an der Ausgangsmasse beinhaltet, und eine zweite Korngrößenfraktion mit Korngrößen von 60 µm bis 750 µm und einem Massenanteil von 0 Gew% bis 34 Gew% sowie eine dritte Korngrößenfraktion mit Korngrößen größer als 750 µm bis 2000 µm und einem Massenanteil von 0 Gew% bis 46 Gew%.

10. Vorrichtung zur Herstellung von Bauteilen und Halbzeugen aus synthetischem Graphit oder aus keramischem Granulat, insbesondere zur Herstellung von Graphitrohren (52), beinhaltend eine Strangpresse (22) mit einem innerhalb eines Pressengehäuses (24) längsbeweglich geführten Preßkolben (26), der einen in eine verengte Austrittsöffnung (28) mit einem Durchmesser (d) mündenden, mit Preßgut befüllbaren und durch seine Preßbewegung verkleinerbaren Vorratsraum (30) mit einem Durchmesser (D) begrenzt, **dadurch gekennzeichnet, daß** der Vorratsraum (30) eine separate, zwischen einer Ausgangsstellung und einer Endstellung des Preßkolbens (26) angeordnete Zuführöffnung (46) hat und daß das Verhältnis (D/d) des Durchmessers (D) des Vorratsraumes (30) zum Durchmesser (d) der Austrittsöffnung (28) kleiner gleich 2,5 ist.

11. Vorrichtung nach Anspruch 10, **dadurch gekennzeichnet, daß** die Längserstreckung der Strangpresse (22) im wesentlichen parallel zur Horizontalen und die Zuführöffnung (46) des Vorratsraumes (30) im wesentlichen quer dazu angeordnet ist.

12. Vorrichtung nach Anspruch 10 oder 11, **dadurch gekennzeichnet, daß** das Pressengehäuse (24) einen den Preßkolben (26) führenden zylin-drischen Abschnitt (32) und einen trichterförmigen Abschnitt (34) umfaßt, der endseitig mit einem die Austrittsöffnung (28) bildenden Rohrmundstück (36) versehen ist, wobei der Vorratsraum (30) im wesentli-chen durch den vom zylindrischen und trichterförmigen Abschnitt (32, 34) umschlossenen und von einer zur Austrittsöffnung (28) weisenden Preßfläche (38) des Preßkolbens (26) begrenzten Raum gebildet wird, wenn der Preßkolben (26) sich in einer von der Austrittsöffnung (28) maximal entfernten Anfangsposition befindet.

13. Vorrichtung nach Anspruch 12, **dadurch gekennzeichnet, daß** die Zuführöffnung (46) als Querbohrung in einer Wandung (48) des zylindrischen Abschnitts (32) ausgebildet ist und durch einen trichterförmigen Einfüllstutzen (50) nach radial außen hin fortgeführt ist, in welchem eine eine Dosiereinrichtung bildende Zellradschleuse (44) aufgenommen ist.

14. Vorrichtung nach Anspruch 13, **dadurch gekennzeichnet, daß** das Verhältnis des Durchmessers (d) des Rohrmundstücks (36) zu seiner Länge (I) kleiner gleich 1 ist und der trichterförmige Abschnitt (34) einen Kegelwinkel (α) von 30 bis 35 Grad aufweist.

15. Bauteil oder Halbzeug aus synthetischem Graphit oder aus keramischem Granulat, insbesondere Graphitrohr (52), erhältlich durch ein Verfahren, welches die Formgebung eines vorzugsweise Petrolkoks oder Graphitgranulat enthaltenden Mischguts (20) mittels einer Strangpresse (22) oder eines Extruders (56; 74) beinhaltet und welches durch folgende Schritte **gekennzeichnet** ist :
a) Vorpressen des Mischguts (20) in statischer oder quasi-statischer Weise, wobei Fließbewegungen des Mischguts (20) derart unterbunden oder behindert werden, daß sich im Mischgut zuvor regellos ausgerichtete Partikel zunächst quer zur Preßrichtung ausrichten,
b) Auspressen des vorgepreßten Mischgut (20) aus einer Austrittsöffnung (28; 61; 82) der Strangpresse (22) oder des Extruders (56; 74), derart, daß sich die Partikel innerhalb des vorverdichteten Mischguts (20) aufgrund eingestellter Fließeigenschaften des Mischguts (20) ausgehend von ihrer Querausrichtung um einen Winkel (β) von maximal 75 Grad in Preßrichtung umrichten.

## Claims

1. A method of manufacturing structural elements and semi-finished products of synthetic graphite or of a ceramic granulate, in particular of manufacturing graphite tubes (52), including the forming of a grain mix (20) preferably containing petroleum coke or graphite granulate, by means of an extrusion press (22) or an extruder (56; 74), **characterized by** the steps of:
a) pre-pressing the grain mix (20) in a static or quasi-static manner, wherein flow movements of the grain mix (20) are prevented or obstructed in such a way that particles which before were randomly aligned in the grain mix are at first aligned transversly to the pressing direction,
b) extruding the pre-pressed grain mix (20) from an extrusion opening (28; 61; 82) of the extrusion press (22) or of the extruder (56; 74) so that the particles change their alignment within the pre-compacted grain mix (20) due to the adjusted flow properties of the grain mix (20) departing from their transverse alignment by an angle (β) of at most 75 degrees toward the pressing direction.

2. The method according to claim 1, **characterized in that** the grain mix (20) is statically pre-pressed preferably by means of a stamping press resulting in a block-shaped preform, and the preform is then inserted in a chamber (62) of a piston extruder (56) and pressed through the extrusion opening (61) to carry out the forming.

3. The method according to claim 1, **characterized in that** the extrusion press (22) includes a chamber (30) with a feed opening (46) for introducing a grain mix (20), which is interposed between initial and end positions of a pressing piston (26) capable of reducing the chamber's (30) size, wherein the forming of the grain mix (20) comprises the following cyclic steps:
a) introducing, in a dosed way, the grain mix in the chamber (30) with the aid of a dosage means (44) until it is completely filled when the pressing piston (26) is in the initial position,
b) quasi-static pre-pressing of the grain mix in the chamber (30) by a slow feed motion of the pressing piston (26) in order to align the particles in a transverse direction to the pressing direction,
c) extruding a volume of the pre-compacted grain mix, which is smaller than the volume originally accommodated in the chamber (30), from the extrusion opening (28), resulting in a pre-compacted residual volume remaining in the chamber (30) when the pressing piston (26) has reached its end position,
d) retracting the pressing piston (26) to the initial position and introducing new grain mix in a dosed way in a space (54) between the pre-compacted residual volume and the pressing piston (26) until the chamber (30) has been completely refilled,
e) continuing with step b).

4. The method according to claim 1, **characterized in that** said forming of the grain mix (20) is carried out by a single barrel extruder (74) wherein the extrusion opening (82) is reduced in diameter as seen in the pressing direction by at least one step (84) which obstructs the flow motion of the grain mix (20).

5. The method according to any one of the preceding claims, **characterized in that** said grain mix (20) is obtained by mixing a basic material containing at least one grain size fraction of petroleum coke and/or graphite granulate (1) with at least one binder (12), wherein the basic material has a mass percentage of 65 % by weight and the binder (12) has a mass percentage of between 5 and 32 % by weight of the total mass of said grain mix (20).

6. The method according to claim 5, **characterized in that** additional carbon fibres (14) are admixed to the grain mix (20) prior to pre-pressing, having a mass percentage of between 0 and 15 % by weight of the total mass of the grain mix.

7. The method according to claim 5 or 6, **characterized in that** additional pressing additives (16) are admixed to the grain mix prior to pre-pressing, wherein said pressing additives have a mass percentage of between 0 and 5 % by weight of the total mass of the grain mix.

8. The method according to any one of claims 5 to 7, **characterized in that** the mixing of the basic material and the binder (16) and other raw materials is carried out by a slowly rotating mixer, preferably a tumbling mixer or a drum hoop mixer (18).

9. The method according to any one of claims 5 to 8, **characterized in that** said basic material is crushed and sifted in such a way that it essentially contains a first grain size fraction having grain sizes greater than 0 mm and smaller than 60 µm, and having a mass percentage of between 20 and 100 % by weight of the basic material, and a second grain size fraction having grain sizes of between 60 µm and 750 µm, and a mass percentage of between 0 % by weight and 34 % by weight, and a third grain size fraction having grain sizes greater than 750 µm and up to 2000 µm, and a mass percentage of between 0 % by weight and 46 % by weight.

10. An apparatus for the manufacture of structural elements and semi-finished products of synthetic graphite or of a ceramic granulate, in particular for the manufacture of graphite tubes (52), comprising an extrusion press (22) with a pressing piston (26) longitudinally moveable within a press housing (24), defining a chamber (30) with a diameter (D) and able to be filled with material to be pressed and to be reduced in volume by its compression motion, and opening into a reduced-diameter extrusion opening (28) with a diameter (d), **characterized in that** said chamber (30) has a separate feed opening (46) positioned between initial and end positions of said pressing piston (26) and **in that** the ratio (D/d) of the diameter (D) of said chamber (30) to the diameter (d) of said extrusion opening (28) is equal or smaller than 2.5.

11. The apparatus according to claim 10, **characterized in that** the longitudinal extension of the extrusion press (22) is essentially parallel to the horizontal, and the feed opening (46) of said chamber (30) is essentially transverse to the latter.

12. The apparatus according to claim 10 or claim 11, **characterized in that** said press housing (24) has a cylindrical portion (32) guiding said pressing piston (26) and a funnel-shaped portion (34) which is equipped with a tube die (36) at its end which forms the extrusion opening (28), wherein said chamber (30) is essentially formed by the space defined by said cylindrical and funnel-shaped portions (32, 34) and a pressing surface (38) of said pressing piston (26) facing said extrusion opening (28), when said pressing piston (26) is in an initial position at a maximum distance from the extrusion opening (28).

13. The apparatus according to claim 12, **characterized in that** said feed opening (46) is configured as a transverse bore in a wall (48) of said cylindrical portion (32) and is continued by a funnel-shaped filler neck (50) in a radial direction toward the outside, in which a rotary valve is accommodated which forms a dosage means.

14. The apparatus according to claim 13, **characterized in that** said ratio of the diameter (d) of said tube die (36) to its length (l) is equal or smaller than 1 and the funnel-shaped portion (34) has a coning angle (α) of between 30 and 35 degrees.

15. A structural element or semi-finished product of synthetic graphite or of a ceramic granulate, in particular a graphite tube (52), obtainable by a method comprising the forming of a grain mix (20) preferably containing petroleum coke or graphite granulate, by means of an extrusion press (22) or an extruder (56; 74) and **characterized by** the steps of:
a) pre-pressing said grain mix (20) in a static or quasi-static manner, wherein flow movements of the grain mix (20) are prevented or obstructed in such a way that particles which before were randomly aligned in the grain mix are at first aligned transversly to the pressing direction,
b) extruding the pre-pressed grain mix (20) from an extrusion opening (28; 61; 82) of the extrusion press (22) or of the extruder (56; 74) so that the particles change their alignment within the pre-compacted grain mix (20) due to the adjusted flow properties of the grain mix (20) departing from their transverse alignment by an angle (β) of at most 75 degrees toward the pressing direction.

## Revendications

1. Procédé de fabrication de composants et de demi-produits en graphite synthétique ou en granulat céramique, en particulier pour la fabrications de tube en graphite (52), contenant le façonnage d'un produit composite (20) qui contient de préférence du coke de pétrole ou un granulat de graphite au moyen d'une boudineuse (22) ou d'une extrudeuse (56 ; 74), **caractérisé par** les étapes suivantes :
a) précompression du produit composite (20) de manière statique ou quasi statique, des écoulements du produit composite (20) étant supprimés ou entravés de telle manière que des particules qui étaient auparavant orientées sans règle dans le produit composite s'orientant tout d'abord transversalement par rapport au sens de pression,
b) éjection par pression du produit composite précompressé (20) par une ouverture de sortie (28 ; 61 ; 82) de la boudineuse (22) ou de l'extrudeuse (56 ; 74) de telle manière que les particules à l'intérieur du produit composite précomprimé (20) changent d'orientation en raison de propriétés d'écoulement du produit composite (20) en partant de leur orientation en travers d'un angle (β) de 75 degrés au maximum dans le sens de pression.

2. Procédé selon la revendication 1, **caractérisé en ce que** le produit composite (20) est précompressé statiquement de préférence au moyen d'une presse à estamper en une ébauche de type bloc et l'ébauche de type bloc est ensuite mise en place dans un espace de réserve (62) d'une extrudeuse à piston (56) pour le presser pour le façonnage par l'ouverture de sortie (61).

3. Procédé selon la revendication 1, **caractérisé en ce que** la boudineuse (22) présente un espace de réserve (30) avec une ouverture d'alimentation (46) pour alimenter le produit composite (20) qui est intercalée entre une position de départ et une position d'extrémité d'un piston de compression (26) réductible pour l'espace de réserve (30), le façonnage du produit composite (20) comprenant les étapes suivantes qui forment un cycle :
a) Dosage du produit composite dans l'espace de réserve (30) à l'aide d'un dispositif de dosage (44) jusqu'à ce que celui-ci soit complètement rempli lorsque le piston de compression (26) se trouve dans la position de départ,
b) précompression quasi statique du produit composite dans l'espace de réserve (30) par lent avancement du piston de compression (26) pour orienter les particules transversalement par rapport au sens de pression,
c) éjection par pression d'un volume de produit composite précompacté par l'ouverture de sortie (28) qui est plus petit que le volume qui se trouve à l'origine dans l'espace de réserve (30) si bien qu'il reste, lorsque le piston de compression (26) a atteint la position d'extrémité dans l'espace de réserve, un volume résiduel précompacté,
d) retour du piston de compression (26) dans la position de départ et dosage d'un nouveau produit composite dans un espace de réserve (54) entre le volume résiduel précompacté et le piston de compression (26) jusqu'à ce que l'espace de réserve (30) soit entièrement rempli à nouveau,
e) poursuite avec l'étape b).

4. Procédé selon la revendication 1, **caractérisé en ce que** le façonnage du produit composite (20) se fait par une extrudeuse à une vis (74) dont l'ouverture de sortie (82) est effilée dans le sens de la pression, ceci étant vu par au moins un étage (84) qui empêche des écoulements du produit composite (20).

5. Procédé selon l'une des revendications précédentes, **caractérisé en ce que** le produit composite (20) est obtenu par mélange d'au moins une masse de départ qui contient une fraction granulométrique de coke de pétrole et/ou de granulat de graphite (1) avec au moins un liant (12), la masse de départ ayant un pourcentage en masse de 65 à 95 % en poids et le liant (12) ayant un pourcentage en masse entre 5 et 32 % en poids de la masse totale du produit composite (20).

6. Procédé selon la revendication 5, **caractérisé en ce qu'**avant la précompression des fibres de carbone (14) sont ajoutées par mélange en plus au produit composite (20), celles-ci présentant un pourcentage en masse de 0 à 15 % en poids de la masse totale du produit composite.

7. Procédé selon la revendication 5 ou 6, **caractérisé en ce qu'**avant la précompression des auxiliaires de compression (16) sont ajoutés par mélange en plus au produit composite (20), les auxiliaires de compression ayant un pourcentage en masse de 0 à 5 % en poids de la masse totale du produit composite.

8. Procédé selon l'une des revendications 5 à 7, **caractérisé en ce que** le mélange de la masse de départ et du liant (16) ainsi que d'autres matières premières se fait par un mélangeur à faible vitesse, par exemple par un mélangeur culbuteur ou par un mélangeur à roue de Rhön (18).

9. Procédé selon l'une des revendications 5 à 8, **caractérisé en ce que** la masse de départ est broyée et tamisée avant le mélange de telle manière qu'elle contient essentiellement une première fraction granulométrique avec des grosseurs de grain supérieures à 0 mm et inférieures à 60 µm et avec un pourcentage en masse de 20 à 100 % en poids de la masse de départ et une seconde fraction granulométrique avec des grosseurs de grain de 60 µm à 750 µm et un pourcentage en masse de 0 % en poids à 34 % en poids ainsi qu'une troisième fraction granulométrique avec des grosseurs de grain supérieures à 750 µm à 2000 µm et un pourcentage en masse de 0 % en poids à 46 % en poids.

10. Dispositif pour la fabrication de composants et de demi-produits en graphite synthétique ou en granulat céramique, en particulier pour la fabrication de tube en graphite (52), contenant une boudineuse (22) avec un piston de compression (26) guidé mobile longitudinalement à l'intérieur d'un bâti de boudineuse (24), qui limite un espace de réserve (30) avec un diamètre (D) qui aboutit dans une ouverture de sortie rétrécie (28) avec un diamètre (d), pouvant être rempli de matière compressée et pouvant être réduit par son mouvement de compression, **caractérisé en ce que** l'espace de réserve (30) a une ouverture d'alimentation séparée (46) placée entre une position de départ et une position d'extrémité du piston de compression (26) et que le rapport (D/d) du diamètre (D) de l'espace de réserve (30) au diamètre (d) de l'ouverture de sortie (28) est inférieur ou égal à 2,5.

11. Dispositif selon la revendication 10, **caractérisé en ce que** l'extension en longueur de la boudineuse (22) est placée substantiellement parallèle à l'horizontale et l'ouverture d'alimentation (46) de l'espace de réserve (30) substantiellement transversalement par rapport à celle-ci.

12. Dispositif selon la revendication 10 ou 11, **caractérisé en ce que** le bâti de la boudineuse (24) comprend une section cylindrique (32) qui guide le piston de compression (26) et une section en forme d'entonnoir (34) qui est pourvue, du côté de l'extrémité, d'un ajutage de tube (36) qui forme l'ouverture de sortie (28), l'espace de réserve (30) étant formé substantiellement par l'espace enfermé par la section cylindrique et en forme d'entonnoir (32, 34) et limitée par une surface de pression (38) du piston de compression (26) qui est tournée vers l'ouverture de sortie (28) lorsque le piston de compression (26) se trouve dans une position de départ éloignée au maximum de l'ouverture de sortie (28).

13. Dispositif selon la revendication 12, **caractérisé en ce que** l'ouverture d'alimentation (46) est configurée comme forure transversale dans une paroi (48) de la section cylindrique (32) et est poursuivie dans le sens radial vers l'extérieur par une tubulure de remplissage (50) dans laquelle une écluse à roue cellulaire (44) qui forme un dispositif de dosage est logée.

14. Dispositif selon la revendication 13, **caractérisé en ce que** le rapport du diamètre (d) de l'ajutage de tube (36) et de sa longueur (l) est inférieur ou égal à 1 et la section en forme d'entonnoir (34) présente un angle de cône (α) de 30 à 35 degrés.

15. Composant ou demi-produit en graphite synthétique ou en granulat céramique, en particulier tube de graphite (52), pouvant être obtenu par un procédé qui contient le façonnage d'un produit composite (20) qui contient de préférence du coke de pétrole ou un granulat de graphite au moyen d'une boudineuse (22) ou d'une extrudeuse (56 ; 74) et qui est **caractérisé par** les étapes suivantes :
a) précompression du produit composite (20) de manière statique ou quasi statique, des écoulements du produit composite (20) étant supprimés ou entravés de telle manière que des particules qui étaient auparavant orientées sans règle dans le produit composite s'orientant tout d'abord transversalement par rapport au sens de pression,
b) éjection par pression du produit composite précompressé (20) par une ouverture de sortie (28 ; 61 ; 82) de la boudineuse (22) ou de l'extrudeuse (56 ; 74) de telle manière que les particules à l'intérieur du produit composite précomprimé (20) changent d'orientation en raison de propriétés d'écoulement du produit composite (20) en partant de leur orientation en travers d'un angle (β) de 75 degrés au maximum dans le sens de pression.
